# EUROPÄISCHE PATENTANMELDUNG

(11) **EP 3 439 247 A1**
(43) Veröffentlichungstag der Anmeldung: **06.02.2019**
(21) Anmeldenummer: 17184038.2
(22) Anmeldetag: 31.07.2017
(51) Int. Cl.: H04L 12/58

(54) **VERFAHREN UND SYSTEM ZUR MANIPULATION EINER LAUFENDEN KOMMUNIKATION**

(71) Anmelder: Deutsche Telekom AG, 53113 Bonn (DE)
(72) Erfinder: SCHERER, Christoph, 64625 Bensheim (DE); MACLEAN, Charles, 53757 Sankt Augustin (DE)
(74) Vertreter: Raible Deissler Lehmann Patentanwälte PartG mbB

(57) **Zusammenfassung**

Die vorliegende Erfindung betrifft ein Verfahren und ein System zur automatischen Manipulation einer über eine Kommunikationsanwendung (101) laufenden Kommunikation mit einem oder zwischen mehreren Kommunikationsteilnehmern, wobei die Kommunikationsanwendung (101) in mindestens einem auf mindestens einer ersten Rechnereinheit laufenden Betriebssystem implementiert ist, bei dem mittels einer auf einer zweiten Rechnereinheit implementierten und mit der Kommunikationsanwendung (101) in Datenverbindung (102) stehenden Engine mit künstlicher Intelligenz (103) die Kommunikation und ein Kommunikationskontext analysiert, aus mindestens einer Informationsquelle (105, 107, 109, 111, 113) Daten kontextbasiert extrahiert und der Kommunikationsanwendung (101) als kontextbasierte Dateneingabe bereitgestellt werden.

## Beschreibung

Die vorliegende Erfindung betrifft ein Verfahren und ein System zur automatischen Manipulation einer über eine Kommunikationsanwendung laufenden digitalen Kommunikation mit einem oder zwischen mehreren Kommunikationsteilnehmern.

Bei einer über eine Kommunikationsanwendung (App) laufenden digitalen Kommunikation handelt es sich prinzipiell um einen Prozess der digitalen Übertragung von Daten/Nachrichten zwischen einem Sender und einem oder mehreren Empfängern, welche allgemein als Kommunikationsteilnehmer bezeichnet werden. Bei den Kommunikationsteilnehmern handelt es sich in der Regel um Personen, die sich unter Verwendung von ihnen zuordenbaren Kommunikationsendgeräten bzw. via anderer Schnittstellen zur Nutzung der Kommunikationsanwendung anmelden, um über die Kommunikationsanwendung eine Kommunikation zu führen, d.h. Daten zu senden und/oder zu empfangen.

Als Kommunikationskanäle werden dabei Sprachkanäle/Audiokanäle zur Übertragung von Sprache bzw. akustischen Signalen und Videokanäle zur Übertragung von visuellen Signalen, wie Videos und/oder stationären Bildern verwendet.

US 2008/0158334 A1 beschreibt eine Vorrichtung mit einem Display, einer Eingabeeinheit und einem mit dem Display und der Eingabeeinheit verbundenen Prozessor. Der Prozessor ist dazu ausgelegt, eine Eingabe zu erkennen und in Reaktion auf die Eingabe mindestens einen Effekt in ein von der Vorrichtung übermitteltes Video einzubetten.

Aus der US 2015/0373183 A1 ist ein digitaler Assistent bekannt, der auf einer Vorrichtung implementiert ist und dazu ausgelegt ist, sich als aktiver Teilnehmer in eine Kommunikation zwischen lokalen und entfernten Parteien einzuschalten.

Die US 2015/0163561 A1 beschreibt Techniken zum Erfassen von Sprache enthaltenen Audio-Daten an einem Endgerät, Umwandeln der Daten in Text, Identifizieren von Schlagwörtern und Bestimmen einer mit dem Endgerät assoziierten geografischen Information.

Es war nun eine Aufgabe der vorliegenden Erfindung eine weitere Möglichkeit vorzusehen, eine über derartige Kommunikationskanäle laufende Kommunikation bzw. deren Inhalt mit weiteren (ergänzenden) Inhalten anzureichern, um die Kommunikation dadurch weiter zu verbessern.

Die Aufgabe wird gelöst durch ein Verfahren und ein System mit den Merkmalen der jeweils unabhängigen Patentansprüche. Weitere Vorteile und Ausgestaltungen werden durch die jeweils abhängigen Patentansprüche und die nachfolgende Beschreibung erläutert.

Erfindungsgemäß wird ein Verfahren zur automatischen Manipulation einer über eine Kommunikationsanwendung (App) laufenden Kommunikation mit einem oder zwischen mehreren Kommunikationsteilnehmern bereitgestellt, wobei die Kommunikationsanwendung in mindestens einem auf mindestens einer ersten Rechnereinheit laufenden Betriebssystem implementiert ist. Gemäß dem erfindungsgemäßen Verfahren werden mittels einer auf einer zweiten Rechnereinheit implementierten und mit der Kommunikationsanwendung in Datenverbindung stehenden Engine für künstliche Intelligenz die Kommunikation und ein Kommunikationskontext analysiert, aus mindestens einer Informationsquelle Daten kontextbasiert extrahiert und der Kommunikationsanwendung als kontextbasierte Dateneingabe bereitgestellt.

Im Rahmen der vorliegenden Offenbarung ist die Kommunikationsanwendung eine sogenannte App (englisch: Application). Dabei kann es sich um eine Vielzahl verschiedener Software handeln. Die Kommunikationsanwendung bzw. die App ist dabei in mindestens einem Betriebssystem mindestens einer ersten Rechnereinheit, in der Regel eines mobilen Kommunikationsendgeräts installiert.

App steht als Abkürzung für das englische Wort "Application" (Anwendung). Eine Anwendung ist ein Software-Programm, das direkt für den Nutzer oder in einigen Fällen für ein anderes Anwendungsprogramm eine bestimmte Funktion ausführen soll. Mobile Apps sind Anwendungsprogramme, die im Internet zum Herunterladen auf Smartphones und/oder Tablet-PCs bereitstehen. Eine App ist in der Regel eine schmale Computer- oder Mobile Software, die eine bestimmte Funktion für einen Nutzer erfüllt. Eine App ist im Wesentlichen ein Programm, wie zum Beispiel ein Textprogramm oder ein Spiel, das den Nutzer in einem bestimmten Bereich unterstützt. Apps sind Anwendungsprogramme und unterscheiden sich dadurch zum Beispiel von Systemprogrammen, sodass durch die Benutzung ein direkter Wert für den Nutzer entsteht. Es kann lokal auf eine App zugegriffen werden, indem die Software auf einer lokalen Rechnereinheit, wie bspw. einem Smartphone, einem Tablet oder einem PC installiert wird, wodurch es sich dann um eine Desktop-Anwendung handelt. Das bedeutet, dass in diesem Fall die erste Rechnereinheit eine derart lokale Rechnereinheit ist. Wird die App über einen fremden Server angesteuert, handelt es sich in der Regel um eine Webanwendung. In diesem Fall ist dann die erste Rechnereinheit der fremde Server bzw. Remote-Server, auf den über eine bspw. auf einem Kommunikationsendgerät installierte Schnittstelle zugegriffen werden kann.

Es gibt verschiedene Typen von Apps:
Eine Web-App ist auf einem Remote-Server bzw. Web-Server, wie bspw. in einer Cloud gespeichert und wird per Internet über eine Browser-Schnittstelle bereitgestellt. Das bedeutet, dass die Laufzeitumgebung für eine Web-App ein normaler Internet-Browser ist. Ein solcher ist für fast alle Betriebssysteme unterschiedlicher Hardwareplattformen verfügbar. Ein Code der Anwendung bzw. der Web-App wird dabei auf dem Web-Server abgelegt, vom Browser geladen und ausgeführt. Daten der Anwendung liegen üblicherweise ebenfalls auf einem Server im Web, d. h. einem Remote-Server, wie bspw. in einer Cloud. Zwingend notwendig zur Nutzung einer Web-Anwendung ist eine Internet-Verbindung.
Eine native App wird für die Verwendung auf einer bestimmten Plattform oder einem bestimmten Gerät entwickelt.
Eine Hybrid-App verbindet Elemente von nativen und Web-Apps. Hybrid-Apps werden oft im Zusammenhang mit mobilen Endgeräten verwendet. Hierbei ist ein erster Teil der App, ähnlich einer nativen App, auf einer lokalen Rechnereinheit und ein zweiter Teil der App, ähnlich wie eine Web-App, auf einem Remote-Server implementiert.

Gemäß einer möglichen Ausführungsform des erfindungsgemäßen Verfahrens wird die durch die Engine für künstliche Intelligenz bereitgestellte kontextbasierte Dateneingabe von der Kommunikationsanwendung in die laufende Kommunikation online eingeführt, wodurch die laufende Kommunikation mit den extrahierten Daten angereichert wird. Eine "Online" Einführung meint dabei, dass während die Kommunikation läuft, d.h. andauert, die kontextbasierte Dateneingabe Eingang in die Kommunikation findet und dadurch die Kommunikation in ihrer Ausprägung beeinflusst bzw. modifiziert.

In weiterer Ausgestaltung des erfindungsgemäßen Verfahrens ist der eine oder mindestens einer der mehreren Kommunikationsteilnehmer ein virtueller Kommunikationsteilnehmer, der einen separaten, d. h. einen außerhalb bzw. unabhängig von der laufenden über die Kommunikationsanwendung geführten Kommunikation realisierten Kommunikationskanal zu einem der anderen Kommunikationsteilnehmer oder zu einer nicht an der Kommunikation teilnehmenden Einheit hat bzw. dem ein separater Kommunikationskanal zu einem der anderen Kommunikationsteilnehmer oder zu einer nicht an der Kommunikation teilnehmenden Einheit zugeordnet wird.

Die mindestens eine Informationsquelle kann dabei bspw. eine personalisierte und auf einem Nutzerendgerät installierte Informationsquelle für die Kommunikation sein, wie bspw. Video- und/oder Audiodaten, die in einer auf dem Nutzerendgerät installierten Speichereinheit abgelegt bzw. gespeichert sind, und/oder auf dem Nutzerendgerät installierte Sensoren und/oder Apps. Ferner kann die mindestens eine Informationsquelle ein soziales Netzwerk oder ein öffentliches Portal sein. Ein soziales Netzwerk ist ein Online-Dienst, der eine sogenannte Online-Community beherbergt. Nutzer können über soziale Netzwerke miteinander kommunizieren und teilweise in einem virtuellen Raum interagieren. Auf der technischen Grundlage eines sozialen Mediums (Social Media), das als Plattform zum wechselseitigen Austausch von Meinungen, Erfahrungen und Informationen eingesetzt wird, ergibt sich ein abgrenzbares soziales Netzwerk von Nutzern mit von ihnen erzeugten Inhalten. Ein Portal ist eine Anwendung, die einen zentralen Zugriff auf personalisierte Inhalte sowie bedarfsgerecht auf Prozesse bereitstellt. Charakterisierend für Portale ist eine Verknüpfung und ein Datenaustausch zwischen heterogenen Anwendungen über eine Portalplattform. In der Regel gibt es eine homogene Benutzeroberfläche.

Gemäß einer möglichen Ausgestaltung des erfindungsgemäßen Verfahrens fügt die Engine für künstliche Intelligenz einen virtuellen Kommunikationsteilnehmer zu der Kommunikation hinzu. Alternativ dazu ersetzt die Engine für künstliche Intelligenz einen Kommunikationsteilnehmer durch einen virtuellen Kommunikationsteilnehmer.

In weiterer Ausgestaltung initiiert die Engine für künstliche Intelligenz den Aufbau des voranstehend bereits genannten zweckbestimmten separaten Kommunikationskanals zu mindestens einem der Kommunikationsteilnehmer und/oder zu einer nicht an der Kommunikation teilnehmenden Einheit und nutzt diesen, um darüber eine Interaktion des mindestens einen Kommunikationsteilnehmers und/oder der nicht an der Kommunikation teilnehmenden Einheit mit einem virtuellen Kommunikationsteilnehmer zu ermöglichen. Der zweckbestimmte Kommunikationskanal kann durch die Kommunikationsanwendung selbst, durch eine weitere Kommunikationsanwendung oder durch eine andere existierende Kommunikationssoftware, wie Text Messenger, bspw. WhatsApp, SMS, etc. und/oder Audio- und/oder Videokommunikationssoftware, realisiert werden.

Gemäß weiterer Ausgestaltung wird die Kommunikation in Form mindestens eines Audiostreams und/oder mindestens eines Videostreams und/oder einer Sprachkommunikation ausgeführt. Es kann sich dabei auch um eine Kombination aus Audiostream, Videostream und Sprache handeln. Um einem jeweiligen realen Kommunikationsteilnehmer die Kommunikation zu ermöglichen, verfügt jedes einem jeweiligen Kommunikationsteilnehmer zuordenbares bzw. zugeordnetes Kommunikationsendgerät, was ein Smartphone, ein Tablet, ein PDA und/oder ein PC sein kann, über geeignete die Kommunikation ermöglichende Ein- und Ausgabemittel, wie bspw. Display, Mikrofon, Lautsprecher, Tastatur bzw. Tastenfeld etc.

Der mindestens eine Videostream wird dabei bspw. durch einen der folgenden Schritte modifiziert und/oder ersetzt: Austauschen eines Hintergrundbildes des Videostreams; Entfremden innerhalb des Videostreams einer in dem Video mitwirkenden Person, eines in dem Video mitwirkenden Objekts und/oder eines in dem Video mitwirkenden Tieres innerhalb des Videostreams; Ändern von Videoparametern und/oder detektierten Objektparametern, wie Farbe, Sättigung, Größe, Helligkeit; Hinzufügen von Objekten zu dem mindestens einen Videostreams, wie Sprechblasen; Eliminieren von innerhalb des Videostreams detektierten Objekten; Rendering eines virtuellen Raumes und/oder Anordnen von Kommunikationsteilnehmern innerhalb des Raumes mit zusätzlichen Objekten.

Der mindestens eine Audiostream wird dabei bspw. durch einen der folgenden Schritte modifiziert und/oder ersetzt: Hinzufügen von Hintergrundgeräuschen und/oder Musik; Löschung von Hintergrundgeräuschen; Sprachentfremdung; Hinzufügen von kontextbasierten Geräuschen.

Ferner ist es denkbar, der laufenden Kommunikation Text, in Abhängigkeit des Kommunikationsverlaufs sich online, d. h. in Echtzeit, ändernde Bilder und/oder Videos hinzuzufügen.

Ein Ziel der Erfindung ist es, innerhalb einer laufenden Kommunikation einer Kommunikationsapplikation bzw. -anwendung mit einem oder einer Mehrzahl von Kommunikationsteilnehmern einen Videostream und/oder einen Audiostream und/oder zusätzliche Informationen, wie Text, Bilder, Videos unter Verwendung von personalisierten Informationsquellen für die Kommunikation, wie bspw. Video- und/oder Audiodaten, Sensordaten oder personalisierte Apps, ein soziales Netz oder andere Informationsquellen, wie öffentliche Portale und/oder Ads, zu modifizieren, um damit die laufende Kommunikation zu bereichern oder zu beeinflussen. Eine derartige Bereicherung könnte dabei bspw. durch eine Gamification realisiert werden, d. h. eine Übertragung von spieltypischen Elementen und Vorgängen in die laufende Kommunikation. Dadurch soll bspw. eine Motivation von Kommunikationsteilnehmern gesteigert und/oder ein Verhalten der Kommunikationsteilnehmer geändert werden. Zu spieltypischen Elementen gehören bspw. Beschreibungen, Preise und Vergleiche. Zu spieltypischen Vorgängen zählt eine Bewältigung von Aufgaben durch individuelle oder kollaborative Leistung. Spieltypische Elemente können auch Erfahrungspunkte, Highscores, Fortschrittsbalken, Ranglisten, virtuelle Güter oder Auszeichnungen sein.

Der eine oder zumindest ein Teil der mehreren Kommunikationsteilnehmer können virtueller Natur sein und einen ihnen zugeordneten separaten Kommunikationskanal zu einem anderen Kommunikationsteilnehmer oder zu einer nicht an der Kommunikation teilnehmenden Einheit haben. Über den separaten Kommunikationskanal ist der mindestens eine virtuelle Kommunikationsteilnehmer steuerbar.

Zur Realisierung des erfindungsgemäßen Verfahrens, d. h. zur Manipulation einer auf einer Kommunikationsanwendung laufenden Kommunikation für einen oder mehrere Kommunikationsteilnehmer wird eine Engine für künstliche Intelligenz eingesetzt, die in einer kontextsensitiven Art und Weise eine kontextbasierte und somit sinnvolle Bereicherung für die laufende Kommunikation generiert und der die laufende Kommunikation durchführenden Kommunikationsanwendung als Eingabe bzw. Input bereitstellt.

Dabei kann bspw., wie voranstehend bereits beschrieben, ein Videostream modifiziert oder ersetzt werden durch Austausch eines Hintergrunds des Videos, Entfremdung einer Person, eines Tiers oder eines Objekts innerhalb des Videos, Ändern von Video- und/oder detektierten Objektparametern, wie Farbe, Sättigung, Helligkeit und/oder Größe, Hinzufügen von Objekten, wie bspw. Sprechblasen, Eliminieren von detektierten Objekten, wie bspw. parkenden Autos, Rendering eines virtuellen Raums und/oder Platzierung von Kommunikationsteilnehmern in den Raum mit zusätzlichen Objekten. Es ist ferner denkbar, reine Text- und/oder Bildelemente in einem Randbereich außerhalb, insbesondere unterhalb des Videostreams einzublenden bzw. anzuzeigen.

Beim Rendering wird im 2D- oder 3D-Raum ein Bild aus Rohdaten erzeugt, wobei es sich bei den Rohdaten um geometrische Beschreibungen im 2D- oder 3D-Raum handeln kann. Der 3D-Raum wird dabei auch als Szene bezeichnet, wobei es sich dabei um ein virtuelles räumliches Modell handelt, das Objekte und Materialeigenschaften der Objekte, Lichtquellen sowie eine Position in Blickrichtung eines virtuellen Betrachters definiert. Bei einem Rendering werden zunächst die vom virtuellen Betrachter aus sichtbaren Objekte ermittelt, Aussehen von Oberflächen, die durch deren Materialeigenschaften beeinflusst sind, simuliert und durch eine Lichtteilung innerhalb der Szene, die sich unter anderem durch eine indirekte Beleuchtung zu den Körpern äußert, berechnet.

Ferner kann, wie voranstehend bereits erläutert, ein Audiostream modifiziert oder ersetzt werden. Dabei kann bspw. eine Hintergrundgeräusch-Eliminierung, ein Hinzufügen unterschiedlicher Hintergrundgeräusche und/oder Musik, wie bspw. Meeresrauschen, favorisierte Lieder etc. eingesetzt werden. Ferner kann eine Stimme eines Kommunikationsteilnehmers entfremdet werden, so dass er bspw. die Stimme einer bekannten Figur erhält, wie bspw. die von Darth Vader.

Ferner können kontextbasierte Geräusche hinzugefügt werden, wie bspw. ein Händeklatschen an passenden Stellen des übermittelten Audiostreams.

Neben einer Modifizierung oder Ersetzung eines Video- und/oder Audiostreams können auch weitere zusätzliche Informationen der Kommunikation hinzugefügt werden, wie bspw. Text, bspw. Mitteilungen oder Untertitel, Bilder mit kontinuierlicher Modifikation in Abhängigkeit der fortlaufenden Kommunikation, bspw. hinsichtlich Farbe, Sättigung, Helligkeit, Größe, Entfremdung, Zeichnung, und/oder Videos mit fortlaufender Modifikation in Abhängigkeit der fortlaufenden Kommunikation, ebenfalls im Hinblick auf Farbe, Sättigung, Helligkeit, Größe, Entfremdung, zusätzliche Inhalte.

Die Engine für künstliche Intelligenz generiert die kontextbasierte Anreicherung der mittels der Kommunikationsanwendung durchgeführten laufenden Kommunikation, d. h. die kontextbasierte Dateneingabe, die als Input der Kommunikationsanwendung zur Verfügung gestellt werden soll, indem die Engine für künstliche Intelligenz zunächst die laufende Kommunikation analysiert und dabei zunächst ermittelt, um welche Art der Kommunikation es sich handelt, d. h. ob es sich hierbei um eine reine Audio-, eine reine Video- oder eine reine Textübermittlung oder um eine Kombination derselben handelt. Ferner wird der Kontext, d. h. der Sinnzusammenhang der laufenden Kommunikation festgestellt. Dabei wird bspw. ein aktueller Gefühlszustand der jeweiligen Kommunikationsteilnehmer bestimmt, um in Abhängigkeit davon zusätzliche Daten für die Kommunikation bereitzustellen und in diese einzuarbeiten. Ferner können in Form von sogenannten Metadaten teilnehmerspezifische und/oder gruppenspezifische Vorlieben in Bezug zu der laufenden Kommunikation übermittelt werden und dazu passende Daten als Input der laufenden Kommunikation bzw. der Kommunikationsanwendung zum Einbau in die laufende Kommunikation bereitgestellt werden. Als Informationsquellen, aus welchen derartige Daten kontextbasiert von der Engine für künstliche Intelligenz extrahiert werden können, stehen eine Vielzahl verschiedener Informationsquellen zur Verfügung, mit denen die Engine für künstliche Intelligenz jeweils in Datenverbindung steht, d. h. Daten von diesen Quellen beziehen, d. h. abrufen/downloaden kann. Die Engine für künstliche Intelligenz steht zudem mit der Kommunikationsanwendung in Datenverbindung, so dass sie über die existierende Datenverbindung der Kommunikationsanwendung die von ihr aus den Informationsquellen extrahierten kontextbasierten Daten als Input zur Verfügung stellen kann. Eine derartige Datenverbindung kann drahtgebunden sein, ist in der Regel jedoch eine drahtlose Datenverbindung, d. h. eine auf Funktechnologie basierende Verbindung. Die der Kommunikationsanwendung zur Verfügung zu stellenden kontextbasierten Daten werden von der Engine für künstliche Intelligenz bereits so aufbereitet, dass sie direkt in die laufende Kommunikation eingebaut bzw. einfließen können.

Bei den Informationsquellen kann es sich bspw. um Profile der jeweiligen Kommunikationsteilnehmer in sozialen Netzwerken handeln, wie bspw. Profile, die bei Facebook, Linkedln, Twitter und/oder Amazon für die jeweiligen Kommunikationsteilnehmer hinterlegt sind.

Ferner können als Informationsquellen personalisierte Feeds von Inhalten dienen, wie bspw. im Rahmen von Web-Feed bzw. News-Feed, Spotify oder anderen Musik-Feeds. Bei Web-Feed handelt es sich um eine technisch einfach strukturierte Veröffentlichung von Änderungen auf Webseiten in standardisierten Formaten, wobei ein jeweiliger Nachrichtenempfang hinsichtlich dieser Änderungen von einem jeweiligen Kommunikationsteilnehmer initiiert ist, der einen jeweiligen Web-Feed abonniert hat. Spotify ist ein Musik-Streamingdienst, der es ermöglicht, Musik einer Reihe von Plattenlabels über das Internet bei entsprechender Abonnierung seitens eines Teilnehmers zu hören.

Ferner können Cloud-Anwendungen bzw. Applikationen, wie bspw. ein darin hinterlegter Kalender, Datenspeicher und Cloud-Shares als Informationsquelle dienen. Mittels eines Cloud-Share können Dateien auf einem Server per Browser oder einem Client gespeichert, mit anderen geteilt oder auf andere Geräte eines Teilnehmers übertragen werden. Eine Cloud-Share verwaltet Dateien in sogenannten Foldern, wobei ein derartiger Folder im Wesentlichen dasselbe ist wie ein Ordner oder Verzeichnis auf einer nutzereigenen Festplatte. Derartige Folder können erstellt, geteilt, heruntergeladen oder auch gelöscht werden. Der Dienst des Cloud-Share kann mit einer anzugebenden Adresse und einer Anmeldung über eine öffentlich zugängliche Webseite in Anspruch genommen werden.

Kontextrelevante Informationsquellen, die seitens der Engine für künstliche Intelligenz bei Analyse der laufenden Kommunikation detektiert wurden, sind bspw. eine Firmen-Website, Portale hinsichtlich spezifischer Interessen der an der Kommunikation beteiligten Kommunikationsteilnehmer und/oder Podcasts. Diese Informationsquellen können ebenfalls dazu dienen, aus ihnen kontextbasierte Daten zu extrahieren und als kontextbasierte Dateneingaben der Kommunikationsanwendung zur Verfügung zu stellen. Ein Podcast bzw. Podcasting bezeichnet ein Anbieten abonnierbarer Mediendateien, wie Audio oder Video. Diese darüber abonnierten Mediendaten können nunmehr ebenfalls als Informationsquelle seitens der Engine für künstliche Intelligenz zur Anreicherung der laufenden Kommunikation genutzt werden.

Ferner können sogenannte Ad-Server verwendet werden, die im Allgemeinen zur Auslieferung und Erfolgsmessung von Internet-Werbung eingesetzt werden. Sogenannte Ad-Server dienen dazu, eine Auslieferung von Werbung zu steuern und Kontakte zu messen sowie auszuwerten. Es handelt sich dabei um datenbankbasierte Managementsysteme zur Pflege und Verwaltung von Werbeflächen im Internet. Ad-Server sind dazu ausgelegt, eine richtige Werbung zu einem richtigen Zeitpunkt einer richtigen Zielgruppe anzuzeigen, um somit einen Werbeerfolg zu optimieren. Im erfindungsgemäßen Zusammenhang könnten sie ebenfalls als Informationsquellen dienen, um daraus Daten zu extrahieren, die als kontextbasierte Dateneingabe der Kommunikationsanwendung zur Verfügung gestellt werden können.

Ferner können Informationen, die über ein Nutzerendgerät eines Kommunikationsteilnehmers ermittelt werden können, als zusätzliche Dateneingabe von der Engine für künstliche Intelligenz genutzt werden. Dabei kann es sich bspw. um Sensorinformationen handeln. Dazu kann ein auf dem Nutzerendgerät installiertes Positionsbestimmungssystem, wie bspw. GPS, genutzt werden, um eine Position eines jeweiligen das Nutzerendgerät nutzenden Kommunikationsteilnehmers zu bestimmen. Ferner kann eine auf dem Nutzerendgerät installierte Temperaturmesseinheit als Informationsquelle zur Bereitstellung der aktuellen Temperatur zum Zeitpunkt der laufenden Kommunikation als zusätzliche Information genutzt werden. Darüber hinaus könnte auf dem Nutzerendgerät eine Druckmesseinheit zur Messung des aktuellen Drucks, eine Bewegungsmessungseinheit oder ein Fitnessmessgerät installiert sein. Andere auf dem Nutzerendgerät installierte Applikationen, wie bspw. ein Kalender, eine Speichereinheit, eine Wiedergabeliste bzw. eine Playlist von von dem jeweiligen Kommunikationsteilnehmer bevorzugten Musiktiteln oder ein Application-Sharing, wie es auf dem Nutzerendgerät hinterlegt ist, können ebenfalls als Informationsquelle dienen.

Die Engine für künstliche Intelligenz kann all die voranstehend aufgelisteten Informationsquellen als Informationsquellen zur direkten Modifikation der laufenden Kommunikation nutzen. Beispielsweise können Sensordaten genutzt werden, um Audio- und/oder Vidoeeinlagen des Pulses zu generieren. Ferner können nutzer- und/oder gruppenspezifisch definierte Quellen, wie bspw. geteilte Quellen für Fotos und/oder Dokumente genutzt werden. Darüber hinaus können nutzer- und/oder gruppenspezifische kontextbasierte Bilder, Töne, Text, jeweils extrahiert von einem Portal, als Informationsquellen genutzt werden und unmittelbar als Dateneingabe in die laufende Kommunikation eingearbeitet werden.

Darüber hinaus kann die Engine für künstliche Intelligenz einen virtuellen Kommunikationspartner hinzufügen oder auch ersetzen. Die Engine für künstliche Intelligenz nutzt die oben genannten Informationsquellen, um ein Verhalten eines virtuellen Kommunikationsteilnehmers in einer kontextsensitiven Art und Weise zu modifizieren und Emotionen für einen virtuellen Kommunikationspartner zu generieren. Ein virtueller Kommunikationspartner bzw. -teilnehmer könnte bspw. als Platzhalter für eine reale Person dienen, die aktuell nicht an der laufenden Kommunikation, wie bspw. einer Videokonferenz teilnehmen kann, die aber Beiträge zu der Kommunikation beisteuern bzw. Informationen von der Kommunikation übermittelt haben möchte. Durch den vorgesehenen separaten Kommunikationskanal ist es der realen Person über eine externe Einheit, wie bspw. eine externe Rechnereinheit möglich, den virtuellen Kommunikationspartner zu steuern und darüber mittelbar an der Kommunikation teilzunehmen. Bei dem virtuellen Kommunikationspartner, der von der Engine für künstliche Intelligenz erzeugt wird, handelt es sich demnach um einen Avatar.

Darüber hinaus ist die Engine für künstliche Intelligenz dazu ausgelegt, den voranstehend genannten separaten Kommunikationskanal zu einem Kommunikationsteilnehmer, der an der Kommunikation beteiligt ist, oder zu einer Einheit außerhalb der Kommunikation anzufordern, so dass dieser genutzt werden kann, um mit dem virtuellen Kommunikationsteilnehmer zu interagieren bzw. um den virtuellen Kommunikationsteilnehmer zu steuern. Die außerhalb der Kommunikation angesiedelte Einheit kann dabei eine Person bzw. ein dieser Person zugeordnetes Kommunikationsendgerät oder eine Software-Komponente, ein Software-Bot, die bzw. der auf einer externen Rechnereinheit installiert ist, sein. Bei einem Software-Bot handelt es sich um ein Computerprogramm, das weitgehend automatisch sich wiederholende Aufgaben abarbeitet, ohne dabei auf eine menschliche Interaktion mit einem menschlichen Nutzer angewiesen zu sein. Beispiele für Software-Bots sind ein Web-Crawler von Internet-Suchmaschinen, die selbstständig Web-Seiten besuchen, wobei sie den vorhandenen Links folgen und dabei bspw. einen Inhalt der jeweiligen Seiten auswerten.

Der separate Kommunikationskanal kann dabei durch eine weitere Kommunikationsanwendung oder irgendeine andere existierende Kommunikationssoftware, wie bspw. Text-Messenger, Audio- und/oder Videokommunikationssoftware (SMS, WhatsApp etc.), realisiert werden. Dabei hat die Engine für künstliche Intelligenz Zugriff auf die weitere Kommunikationsanwendung oder die andere existierende Kommunikationssoftware bzw. die Engine für künstliche Intelligenz kann eine Datenverbindung zu der weiteren Kommunikationsanwendung oder zu der anderen existierenden Kommunikationssoftware aufbauen, um darüber den Aufbau des separaten Kommunikationskanal anzufordern bzw. zu initiieren.

Über die durch den separaten Kommunikationskanal ermöglichte Interaktion, d. h. über den Datenaustausch über den separaten, spezifischen Kommunikationskanal, kann auch von einem der Kommunikationsteilnehmer und/oder von der externen Einheit das Verhalten des virtuellen Kommunikationsteilnehmers modifiziert und beeinflusst werden. Die Intention dieser Interaktion ist dabei, den Inhalt der Kommunikation des virtuellen Kommunikationsteilnehmers zu beeinflussen oder die Art und Weise, wie dieser kommuniziert.

Die Engine für künstliche Intelligenz ist dazu ausgelegt, entweder in Echtzeit die Kommunikation zu beeinflussen, d. h. bei laufender Kommunikation, bspw. in Abhängigkeit des Kommunikationsablaufs, akut instantan in die Kommunikation durch eine kontextbasierte Dateneingabe einzugreifen oder in nicht Echtzeit Dateneingaben zur Verfügung zu stellen, in Abhängigkeit von dem über die Engine festgestellten Bedürfnis die detektierte Information direkt oder ggf. auch erst im Nachgang, d. h. zeitverzögert, in eine Kommunikation einzupflegen.

Die vorliegende Erfindung betrifft auch ein System zur automatischen Manipulation einer über eine Kommunikationsanwendung laufenden Kommunikation mit einem oder zwischen mehreren Kommunikationsteilnehmern, wobei die Kommunikationsanwendung in mindestens einem auf mindestens einer ersten Rechnereinheit laufenden Betriebssystem implementiert ist, wobei das System mindestens eine zweite Rechnereinheit und eine auf der zweiten Rechnereinheit implementierte und mit der Kommunikationsanwendung in Datenverbindung stehende Engine für künstliche Intelligenz umfasst, die dazu konfiguriert ist, die Kommunikation und einen Kommunikationskontext zu analysieren, aus mindestens einer Informationsquelle Daten kontextbasiert zu extrahieren und der Kommunikationsanwendung als kontextbasierte Dateneingabe bereitzustellen.

Gemäß einer möglichen Ausführungsform des erfindungsgemäßen Systems umfasst das System ferner die mindestens eine erste Rechnereinheit, das mindestens eine auf der mindestens einen ersten Rechnereinheit laufende Betriebssystem und damit die die laufende Kommunikation mit einem oder zwischen mehreren Kommunikationsteilnehmern realisierende Kommunikationsanwendung, wobei die Kommunikationsanwendung dazu konfiguriert ist, die kontextbasierte Dateneingabe in die laufende Kommunikation online einzuführen, wodurch die laufende Kommunikation mit den extrahierten Daten angereichert wird.

In weiterer Ausgestaltung ist der eine oder mindestens einer der mehreren Kommunikationsteilnehmer ein virtueller Kommunikationsteilnehmer, der einen separaten Kommunikationskanal, d. h. einen außerhalb bzw. unabhängig von der laufenden über die Kommunikationsanwendung geführten Kommunikation realisierten Kommunikationskanal zu einem der anderen Kommunikationsteilnehmer oder zu einer nicht an der Kommunikation teilnehmenden Einheit hat.

Die mindestens eine Informationsquelle ist ausgewählt aus der Gruppe bestehend aus: einer personalisierten und auf einem Nutzerendgerät installierten Informationsquelle für die Kommunikation, wie in einer auf dem Nutzerendgerät installierten Speichereinheit abgelegten Video- und/oder Audiodaten, auf dem Nutzerendgerät installierten Sensoren und/oder Apps, einem sozialen Netzwerk, einem öffentlichen Portal.

In weiterer Ausgestaltung des erfindungsgemäßen Systems ist die Engine für künstliche Intelligenz dazu konfiguriert, einen virtuellen Kommunikationsteilnehmer zu der Kommunikation hinzuzufügen und/oder zu ersetzen.

Ferner ist die Engine für künstliche Intelligenz dazu konfiguriert, wie voranstehend bereits erwähnt, einen zweckbestimmten bzw. separaten Kommunikationskanal zu mindestens einem der Kommunikationsteilnehmer und/oder zu einer nicht an der Kommunikation teilnehmenden Einheit einzuführen und zu nutzen, um darüber eine Interaktion des mindestens einen Kommunikationsteilnehmers und/oder der nicht an der Kommunikation teilnehmenden Einheit mit einem virtuellen Kommunikationsteilnehmer zu ermöglichen.

Das erfindungsgemäße System ist insbesondere dazu konfiguriert, das erfindungsgemäße und voranstehend beschriebene Verfahren auszuführen.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand eines Ausführungsbeispiels in der Zeichnung schematisch dargestellt und wird im Folgenden unter Bezugnahme auf die Zeichnung ausführlich beschrieben.

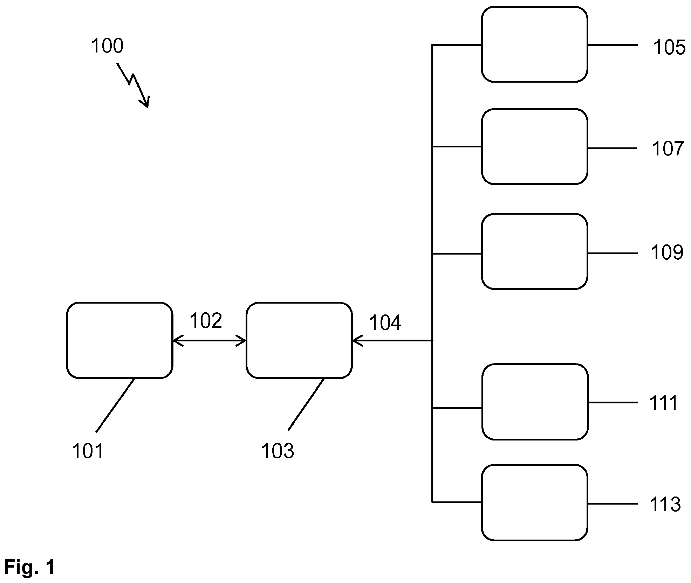

Figur 1 zeigt in schematischer Darstellung ein Ablaufdiagramm einer Ausführungsform des erfindungsgemäßen Verfahrens mit den zur Ausführung des erfindungsgemäßen Verfahrens einzusetzenden Komponenten gemäß einer Ausführungsform des erfindungsgemäßen Systems.

Über eine Kommunikationsanwendung 101 wird für oder zwischen mehreren Kommunikationsteilnehmern eine Kommunikation initiiert und geführt. Dabei ist die Kommunikationsanwendung 101 auf mindestens einer ersten Rechnereinheit installiert bzw. in mindestens einem auf der mindestens einen ersten Rechnereinheit laufenden Betriebssystem implementiert. Dabei kann es sich bei der mindestens einen ersten Rechnereinheit um ein oder mehrere jeweilige Kommunikationsendgeräte eines oder entsprechend mehrerer Kommunikationsteilnehmer handeln, auf welchem bzw. auf welchen jeweilig die Kommunikationsanwendung 101 installiert ist. Über die Kommunikationsanwendung 101 können nunmehr die Kommunikationsteilnehmer eine Kommunikation ausführen. Eine Engine für künstliche Intelligenz 103 ist auf einer zweiten Rechnereinheit implementiert und steht mit der Kommunikationsanwendung 101 in Datenverbindung 102. Das bedeutet, dass die Engine für künstliche Intelligenz 103 dazu ausgelegt ist, über einen Datenverbindungskanal der Kommunikationsanwendung 101 Daten zur Verfügung zu stellen. Ferner steht die Engine für künstliche Intelligenz 103 über eine oder mehrere Datenverbindungen 104 mit mindestens einer, hier einer Mehrzahl von Informationsquellen, in Verbindung, um von den jeweiligen Informationsquellen Daten abrufen zu können. Die hier dargestellten Informationsquellen sind ein soziales Web 105, wie bspw. Facebook, Linkedln etc. Weitere Informationsquellen sind auf einem jeweiligen Kommunikationsendgerät installierte Sensoren 107. Ferner können andere, entweder auf dem Kommunikationsendgerät eines jeweiligen Kommunikationsteilnehmers installierte oder in einer Cloud hinterlegte Anwendungen 109 als Informationsquelle fungieren. Weitere Inhalt-Feeds, wie bspw. News-Feeds 111, die personalisiert oder nicht personalisiert sein können, können als Informationsquellen der Engine für künstliche Intelligenz 103 über den Kommunikationskanal 104 Daten bzw. Informationen zur Verfügung stellen. Ferner gibt es sogenannte Ad-Server 113, die ebenfalls Informationen bereitstellen können bzw. von welchen von der Engine für künstliche Intelligenz 103 Daten extrahiert bzw. bezogen werden können.

Gemäß dem erfindungsgemäßen Verfahren wird nunmehr eine über die Kommunikationsanwendung 101 laufende Kommunikation für einen bzw. zwischen mehreren Kommunikationsteilnehmern von der Engine für künstliche Intelligenz 103 analysiert, wobei ein Kontext, d. h. ein Zusammenhang, in welchem die Kommunikation steht, bestimmt wird, um anhand dieses Kontexts festzustellen, inwieweit bzw. in welcher Form die Kommunikation mit zusätzlichen Informationen angereichert werden kann. Auf Basis des von der Engine für künstliche Intelligenz 103 ermittelten Kontexts der aktuell geführten Kommunikation extrahiert die Engine für künstliche Intelligenz 103 unter Nutzung verschiedener Informationsquellen 105, 107, 109, 111 und 113 über den jeweiligen Kommunikationskanal 104 Informationen bzw. Daten, die im Sinnzusammenhang mit dem Kontext der Kommunikation stehen, führt diese in geeigneter Weise zu einer Einheit zusammen und stellt diese kontextbasierte Dateneingabe der Kommunikationsanwendung 101 über den Datenkanal 102 zur Verfügung, so dass die Kommunikationsanwendung 101 die bereitgestellte Dateneingabe als Bereicherung in die laufende Kommunikation einarbeiten kann. Dadurch kann instantan bei laufender Kommunikation die geführte Kommunikation mit sinnhaften Ergänzungen angereichert werden und damit für den oder für die Kommunikationsteilnehmer in ihrer Qualität verbessert werden.

Ferner ist es möglich, dass die Engine für künstliche Intelligenz 103 in Abhängigkeit vom Verlauf der laufenden Kommunikation der Kommunikationsanwendung 101 über den Datenkanal 102 sukzessive und zeitlich hintereinander an geeigneten Stellen bzw. zu geeigneten Zeitpunkten der laufenden Kommunikation mehrere ggf. aus verschiedenen Informationsquellen 105, 107, 109, 111, 113 extrahierte Daten und fertig aufbereitete Dateneingaben zur Verfügung stellt.

Die Kommunikationsanwendung 101 und die Engine für künstliche Intelligenz 103 können auf ein und derselben Rechnereinheit implementiert sein, was bedeutet, dass die mindestens eine erste Rechnereinheit und die mindestens eine zweite Rechnereinheit zu einer Einheit fusioniert sind. Alternativ dazu können jedoch auch die Kommunikationsanwendung 101 und die Engine für künstliche Intelligenz 103 in voneinander unabhängigen Einheiten hinterlegt sein und bspw. auf dem Kommunikationsendgerät eines Kommunikationsteilnehmers und/oder in einer Cloud-Infrastruktur hinterlegt sein. Beispielsweise kann die Kommunikationsanwendung 101 jeweils auf einem Nutzerendgerät eines jeweiligen Kommunikationsteilnehmers installiert sein, während die Engine für künstliche Intelligenz 103 in einer Cloud-Infrastruktur hinterlegt und darüber für alle Kommunikationsteilnehmer der laufenden Kommunikation unter Nutzung der Kommunikationsanwendung 101 nutzbar ist.

## Patentansprüche

1. Verfahren zur automatischen Manipulation einer über eine Kommunikationsanwendung (101) laufenden Kommunikation mit einem oder zwischen mehreren Kommunikationsteilnehmern, wobei die Kommunikationsanwendung (101) in mindestens einem auf mindestens einer ersten Rechnereinheit laufenden Betriebssystem implementiert ist, bei dem mittels einer auf einer zweiten Rechnereinheit implementierten und mit der Kommunikationsanwendung (101) in Datenverbindung (102) stehenden Engine mit künstlicher Intelligenz (103) die Kommunikation und ein Kommunikationskontext analysiert, aus mindestens einer Informationsquelle (105, 107, 109, 111, 113) Daten kontextbasiert extrahiert und der Kommunikationsanwendung (101) als kontextbasierte Dateneingabe bereitgestellt werden.

2. Verfahren nach Anspruch 1, bei dem die kontextbasierte Dateneingabe von der Kommunikationsanwendung (101) in die laufende Kommunikation online eingeführt wird, wodurch die laufende Kommunikation mit den extrahierten Daten angereichert wird.

3. Verfahren nach Anspruch 1 oder 2, bei dem der eine oder mindestens einer der mehreren Kommunikationsteilnehmer ein virtueller Kommunikationsteilnehmer ist, für den ein separater Kommunikationskanal zu einem der anderen Kommunikationsteilnehmer oder zu einer nicht an der Kommunikation teilnehmenden Einheit aufgebaut wird.

4. Verfahren nach einem der voranstehenden Ansprüche, bei dem die mindestens eine Informationsquelle (105, 107, 109, 111, 113) ausgewählt wird aus der Gruppe bestehend aus: einer personalisierten und auf einem Nutzerendgerät installierten Informationsquelle für die Kommunikation, einem sozialen Netzwerk, einem öffentlichen Portal.

5. Verfahren nach einem der voranstehenden Ansprüche, bei dem die Engine für künstliche Intelligenz (103) einen virtuellen Kommunikationsteilnehmer zu der Kommunikation hinzufügt und/oder ersetzt.

6. Verfahren nach Anspruch 5, bei dem die Engine für künstliche Intelligenz (103) einen separaten zweckbestimmten Kommunikationskanal zu mindestens einem der Kommunikationsteilnehmer und/oder zu einer nicht an der Kommunikation teilnehmenden Einheit einführt und nutzt, um darüber eine Interaktion des mindestens einen Kommunikationsteilnehmers und/oder der nicht an der Kommunikation teilnehmenden Einheit mit dem virtuellen Kommunikationsteilnehmer zu ermöglichen.

7. Verfahren nach einem der voranstehenden Ansprüche, bei dem die Kommunikation in Form mindestens eines Audiostreams und/oder mindestens eines Videostreams und/oder einer Sprachkommunikation ausgeführt wird.

8. Verfahren nach Anspruch 7, bei dem der mindestens eine Videostream durch einen der folgenden Schritte modifiziert und/oder ersetzt wird: Austauschen eines Hintergrundbildes des Videostreams; Entfremden einer Person, eines Objekt und/oder eines Tieres innerhalb des Videostreams; Ändern von Videoparametern und/oder innerhalb des Videostreams detektierten Objektparametern, wie Farbe, Sättigung, Größe, Helligkeit; Hinzufügen von Objekten zu dem mindestens einen Videostream, wie Sprechblasen; Eliminieren von innerhalb des Videostreams detektierten Objekten; Rendering eines virtuellen Raumes; Anordnen von Kommunikationsteilnehmern innerhalb des Raumes mit zusätzlichen Objekten und/oder Anzeigen von Text- und/oder Bildelementen in einem Randbereich außerhalb, insbesondere unterhalb des Videostreams.

9. Verfahren nach Anspruch 7 oder 8, bei dem der mindestens eine Audiostream durch einen der folgenden Schritte modifiziert und/oder ersetzt wird: Hinzufügen von Hintergrundgeräuschen und/oder Musik, Löschung von Hintergrundgeräuschen, Sprachentfremdung, Hinzufügen von kontextbasierten Geräuschen.

10. Verfahren nach Anspruch 7 bis 9, bei dem der mindestens einen Kommunikation Text, in Abhängigkeit des Kommunikationsverlaufs sich online ändernde Bilder und/oder Videos hinzugefügt werden.

11. System zur automatischen Manipulation einer über eine Kommunikationsanwendung (101) laufenden Kommunikation mit einem oder zwischen mehreren Kommunikationsteilnehmern, wobei die Kommunikationsanwendung (101) in mindestens einem auf mindestens einer ersten Rechnereinheit laufenden Betriebssystem implementiert ist, wobei das System mindestens eine zweite Rechnereinheit und eine auf der zweiten Rechnereinheit implementierte und mit der Kommunikationsanwendung in Datenverbindung (102) stehende Engine (103) mit künstlicher Intelligenz umfasst, die dazu konfiguriert ist, die Kommunikation und ein Kommunikationskontext zu analysieren, aus mindestens einer mit der Engine (103) in Datenverbindung stehenden Informationsquelle (105, 107, 109, 111, 113) Daten kontextbasiert zu extrahieren und der Kommunikationsanwendung (101) als kontextbasierte Dateneingabe bereitzustellen.

12. System nach Anspruch 11, das ferner die mindestens eine erste Rechnereinheit, das mindestens eine auf der mindestens ersten Rechnereinheit laufende Betriebssystem und damit die die laufende Kommunikation mit einem oder zwischen mehreren Kommunikationsteilnehmern realisierende Kommunikationsanwendung (101) umfasst, wobei die Kommunikationsanwendung (101) dazu konfiguriert ist, die kontextbasierte Dateneingabe in die laufende Kommunikation online einzuführen, wodurch die laufende Kommunikation mit den extrahierten Daten angereichert wird.

13. System nach Anspruch 11 oder 12, bei dem der eine oder mindestens einer der mehreren Kommunikationsteilnehmer ein virtueller Kommunikationsteilnehmer ist und einen separaten Kommunikationskanal zu einem der anderen Kommunikationsteilnehmer oder zu einer nicht an der Kommunikation teilnehmenden Einheit hat.

14. System nach einem der voranstehenden Ansprüche, bei dem die mindestens eine Informationsquelle (105, 107, 109, 111, 113) ausgewählt ist aus der Gruppe bestehend aus: einer personalisierten und auf einem Nutzerendgerät installierten Informationsquelle für die Kommunikation, einem sozialen Netzwerk, einem öffentlichen Portal.

15. System nach einem der voranstehenden Ansprüche, bei dem die Engine (103) für künstliche Intelligenz dazu konfiguriert ist, mindestens einen virtuellen Kommunikationsteilnehmer zu der Kommunikation hinzuzufügen und/oder zu ersetzen und bei dem die Engine (103) für künstliche Intelligenz dazu konfiguriert ist, einen zweckbestimmten Kommunikationskanal zu mindestens einem der Kommunikationsteilnehmer und/oder zu einer nicht an der Kommunikation teilnehmenden Einheit einzuführen und zu nutzen, um darüber eine Interaktion des mindestens einen Kommunikationsteilnehmers und/oder der nicht an der Kommunikation teilnehmenden Einheit mit dem mindestens einen virtuellen Kommunikationsteilnehmer zu ermöglichen.

## Geänderte Patentansprüche

### Geänderte Patentansprüche gemäss Regel 137(2) EPÜ.

1. Verfahren zur automatischen Manipulation einer über eine Kommunikationsanwendung (101) laufenden Kommunikation mit einem oder zwischen mehreren Kommunikationsteilnehmern, wobei die Kommunikationsanwendung (101) in mindestens einem auf mindestens einer ersten Rechnereinheit laufenden Betriebssystem implementiert ist, bei dem mittels einer auf einer zweiten Rechnereinheit implementierten und mit der Kommunikationsanwendung (101) in Datenverbindung (102) stehenden Engine mit künstlicher Intelligenz (103) die Kommunikation und ein Kommunikationskontext analysiert, aus mindestens einer Informationsquelle (105, 107, 109, 111, 113) Daten kontextbasiert extrahiert und der Kommunikationsanwendung (101) als kontextbasierte Dateneingabe bereitgestellt werden, bei dem die Engine für künstliche Intelligenz (103) einen Avatar zu der Kommunikation hinzufügt, wobei die Engine für künstliche Intelligenz (103) einen separaten zweckbestimmten Kommunikationskanal zu mindestens einem der Kommunikationsteilnehmer und/oder zu einer nicht an der Kommunikation teilnehmenden Einheit einführt und nutzt, um darüber eine Interaktion des mindestens einen Kommunikationsteilnehmers und/oder der nicht an der Kommunikation teilnehmenden Einheit mit dem Avatar zu ermöglichen.

2. Verfahren nach Anspruch 1, bei dem die kontextbasierte Dateneingabe von der Kommunikationsanwendung (101) in die laufende Kommunikation online eingeführt wird, wodurch die laufende Kommunikation mit den extrahierten Daten angereichert wird.

3. Verfahren nach Anspruch 1 oder 2, bei dem der eine oder mindestens einer der mehreren Kommunikationsteilnehmer ein virtueller Kommunikationsteilnehmer ist, für den ein separater Kommunikationskanal zu einem der anderen Kommunikationsteilnehmer oder zu einer nicht an der Kommunikation teilnehmenden Einheit aufgebaut wird.

4. Verfahren nach einem der voranstehenden Ansprüche, bei dem die mindestens eine Informationsquelle (105, 107, 109, 111, 113) ausgewählt wird aus der Gruppe bestehend aus: einer personalisierten und auf einem Nutzerendgerät installierten Informationsquelle für die Kommunikation, einem sozialen Netzwerk, einem öffentlichen Portal.

5. Verfahren nach einem der voranstehenden Ansprüche, bei dem die Kommunikation in Form mindestens eines Audiostreams und/oder mindestens eines Videostreams und/oder einer Sprachkommunikation ausgeführt wird.

6. Verfahren nach Anspruch 5, bei dem der mindestens eine Videostream durch einen der folgenden Schritte modifiziert und/oder ersetzt wird: Austauschen eines Hintergrundbildes des Videostreams; Entfremden einer Person, eines Objekt und/oder eines Tieres innerhalb des Videostreams; Ändern von Videoparametern und/oder innerhalb des Videostreams detektierten Objektparametern, wie Farbe, Sättigung, Größe, Helligkeit; Hinzufügen von Objekten zu dem mindestens einen Videostream, wie Sprechblasen; Eliminieren von innerhalb des Videostreams detektierten Objekten; Rendering eines virtuellen Raumes; Anordnen von Kommunikationsteilnehmern innerhalb des Raumes mit zusätzlichen Objekten und/oder Anzeigen von Text- und/oder Bildelementen in einem Randbereich außerhalb, insbesondere unterhalb des Videostreams.

7. Verfahren nach Anspruch 5 oder 6, bei dem der mindestens eine Audiostream durch einen der folgenden Schritte modifiziert und/oder ersetzt wird: Hinzufügen von Hintergrundgeräuschen und/oder Musik, Löschung von Hintergrundgeräuschen, Sprachentfremdung, Hinzufügen von kontextbasierten Geräuschen.

8. Verfahren nach Anspruch 5 bis 7, bei dem der mindestens einen Kommunikation Text, in Abhängigkeit des Kommunikationsverlaufs sich online ändernde Bilder und/oder Videos hinzugefügt werden.

9. System zur automatischen Manipulation einer über eine Kommunikationsanwendung (101) laufenden Kommunikation mit einem oder zwischen mehreren Kommunikationsteilnehmern, wobei die Kommunikationsanwendung (101) in mindestens einem auf mindestens einer ersten Rechnereinheit laufenden Betriebssystem implementiert ist, wobei das System mindestens eine zweite Rechnereinheit und eine auf der zweiten Rechnereinheit implementierte und mit der Kommunikationsanwendung in Datenverbindung (102) stehende Engine (103) mit künstlicher Intelligenz umfasst, die dazu konfiguriert ist, die Kommunikation und ein Kommunikationskontext zu analysieren, aus mindestens einer mit der Engine (103) in Datenverbindung stehenden Informationsquelle (105, 107, 109, 111, 113) Daten kontextbasiert zu extrahieren und der Kommunikationsanwendung (101) als kontextbasierte Dateneingabe bereitzustellen, bei dem die Engine (103) für künstliche Intelligenz dazu konfiguriert ist, mindestens einen virtuellen Kommunikationsteilnehmer zu der Kommunikation hinzuzufügen und bei dem die Engine (103) für künstliche Intelligenz dazu konfiguriert ist, einen zweckbestimmten Kommunikationskanal zu mindestens einem der Kommunikationsteilnehmer und/oder zu einer nicht an der Kommunikation teilnehmenden Einheit einzuführen und zu nutzen, um darüber eine Interaktion des mindestens einen Kommunikationsteilnehmers und/oder der nicht an der Kommunikation teilnehmenden Einheit mit dem mindestens einen virtuellen Kommunikationsteilnehmer zu ermöglichen.

10. System nach Anspruch 9, das ferner die mindestens eine erste Rechnereinheit, das mindestens eine auf der mindestens ersten Rechnereinheit laufende Betriebssystem und damit die die laufende Kommunikation mit einem oder zwischen mehreren Kommunikationsteilnehmern realisierende Kommunikationsanwendung (101) umfasst, wobei die Kommunikationsanwendung (101) dazu konfiguriert ist, die kontextbasierte Dateneingabe in die laufende Kommunikation online einzuführen, wodurch die laufende Kommunikation mit den extrahierten Daten angereichert wird.

11. System nach Anspruch 9 oder 10, bei dem der eine oder mindestens einer der mehreren Kommunikationsteilnehmer ein virtueller Kommunikationsteilnehmer ist und einen separaten Kommunikationskanal zu einem der anderen Kommunikationsteilnehmer oder zu einer nicht an der Kommunikation teilnehmenden Einheit hat.

12. System nach einem der Ansprüche 9 bis 11, bei dem die mindestens eine Informationsquelle (105, 107, 109, 111, 113) ausgewählt ist aus der Gruppe bestehend aus: einer personalisierten und auf einem Nutzerendgerät installierten Informationsquelle für die Kommunikation, einem sozialen Netzwerk, einem öffentlichen Portal.
